# EUROPÄISCHE PATENTANMELDUNG

(11) **EP 1 666 122 A1**
(43) Veröffentlichungstag der Anmeldung: **07.06.2006**
(21) Anmeldenummer: 04028645.2
(22) Anmeldetag: 03.12.2004
(51) Int. Cl.: B01D 46/24, F01N 3/029, F01N 3/023, F01N 9/00, F01N 11/00, F01N 3/022

(54) **Regenerierbarer Partikelfilter**

(71) Anmelder: Swars, Helmut, 51429 Bergisch Gladbach (DE)
(72) Erfinder: Swars, Helmut, 51429 Bergisch Gladbach (DE)
(74) Vertreter: Gudat, Axel

(57) **Zusammenfassung**

Die Erfindung betrifft einen Partikelfilter (1), insbesondere für Abgase von Dieselbrennkraftmaschinen, mit einer Vielzahl von von dem Fluid durchströmbaren Filterwänden (2) zum Separieren von Partikeln aus einem Fluidstrom, wobei die Filterwände (2) einen Filterkörper bilden, wobei der Filter eine Einströmseite und eine Ausströmseite (7) aufweist und in einer Durchströmungsrichtung von dem zu reinigenden Fluid durchströmbar ist. Um einen Partikelfilter zu schaffen, der schnell und einfach regenerierbar ist sind in einer Richtung quer zu der Durchströmungsrichtung des zu reinigenden Fluids sich durch diesen erstreckende Strömungskanäle für ein Spülfluid mit einer Spülfluideintrittsöffnung (20) und einer Spülfluidaustrittsöffnung (21) vorgesehen, durch die mittels des Spülfluids die von den Filterwänden (2) zurückgehaltenen Partikel durch die Spülfluidströmungskanäle aus dem Filterkörper abführbar sind.

## Beschreibung

Die Erfindung betrifft einen Partikelfilter, insbesondere für Abgase von Dieselbrennkraftmaschinen, mit einer Vielzahl von durch das Fluid zu durchströmenden Filterwänden zum Separieren von Partikeln aus einem Fluidstrom, wobei der Filter eine Einströmseite und eine Ausströmseite aufweist und in einer Durchströmungsrichtung von dem Fluid durchströmbar ist.

Derartige Partikelfilter sind in verschiedensten Ausführungsformen bekannt. Die Regeneration derartiger Partikelfilter, insbesondere bei der Anwendung als Rußfilter im Kraftfahrzeugbereich, ist vergleichsweise aufwändig und Bedarf eines Werkstattaufenthaltes des Fahrzeuges. So wird zur Regeneration der Filter zunächst ausgeglüht, um möglichst sämtliche Bestandteile zu verbrennen, wobei zunächst ein Bereich des Filters auf die erforderliche Temperatur erhitzt wird, so dass dann der Glühherd sich selbständig im Filter ausbreitet und schließlich das gesamte Filtervolumen erfasst wird. Anschließend wird im Gegenstrom zu dem zu reinigenden Fluid die Asche aus dem Filter ausgeblasen. Die Regeneration des Filters muss hierbei an einem separaten Regenerationsstand erfolgen, um die Prozesskontrolle durchzuführen, den hohen Druck für das Spülgas zu erzeugen, welches abgasseitig durch den Filter gepresst wird und um die verbleibende Asche aufzufangen.

Der Erfindung liegt die Aufgabe zugrunde, einen Partikelfilter zu schaffen, bei welchem die Regeneration einfacher und gegebenenfalls schneller durchführbar ist.

Diese Aufgabe wird durch Bereitstellung eines Partikelfilters gelöst, bei welchem der Spülfluidstrom in einer Richtung quer zu der Durchströmungsrichtung des zu reinigenden Fluids geführt wird, wozu sich über einen Teil oder im Wesentlichen die gesamte Breite des Filterkörpers erstreckende, Strömungskanäle für das Spülfluid vorgesehen sind. Der Filterkörper kann beispielsweise durch in einer Vorzugsrichtung gestapelte Filterwände aufgebaut sein, wodurch insbesondere quader- oder prismenförmige Filterkörper aufbaubar sind, oder auch durch radial um eine Achse angeordnete Filterwände, wodurch zylindrische oder teilzylindrische Filterkörper entstehen können.

Durch die Führung des Spülfluids im Querstrom zu dem zu reinigenden Fluid kann die Regeneration bei einem vergleichsweise niedrigen Spülfluiddruck und gegebenenfalls auch bei fortwährendem Betrieb der den partikelbeladenen Abgasstrom erzeugenden Einrichtung oder Anlage durchgeführt werden, da das Spülfluid nicht mehr gegen den Druck des zu reinigenden Fluids arbeiten oder die Einrichtung oder Anlage vorher stillzulegen ist. Die Regeneration kann hierdurch beispielsweise unabhängig von einer Werkstatt an dem jeweiligen Kraftfahrzeug durchgeführt werden. Vorzugsweise kann ferner der Spülfluidstrom in seitlich offene Strömungskanäle oder Filtertaschen für das zu reinigende Fluid eintreten, wodurch zumindest einströmseitig ein Druckverlust des Spülfluids vermieden wird, da dieses nicht mehr durch eine partikeldichte Filterwand in den Filterkörper einströmen muss. Ferner kann dadurch, dass das Spülfluid durch sich praktisch über die gesamte Breite des Filterkörpers erstreckende Strömungskanäle geführt wird, der Spülvorgang besonders effektiv durchgeführt werden. Ferner kann durch Unterstützung durch den Spülfluidstrom quer zur Durchströmungsrichtung des zu reinigenden Fluids die Ausheizphase zur Veraschung der Filterrückstände besonders einfach durchgeführt werden, da der Ausbrand nunmehr nicht durch Filterwände behindert wird. Die Regeneration des Partikelfilters wird somit insgesamt wesentlich vereinfacht.

Die Spülfluidströmungskanäle sind vorzugsweise durchgehend durch den Filterköper ausgebildet.

Besonders bevorzugt sind für das zu reinigende Fluid spaltförmige Kanäle vorgesehen, die sich über im wesentlichen die gesamte Länge des Filterkörpers in Durchströmungsrichtung und/oder dessen Breite erstrecken, wodurch auch eine besonders effektive Regeneration möglich ist.

Die mittlere Spalthöhe der Spülfluidkanäle quer zur Durchströmungsrichtung des zu reinigenden Fluids kann ≥ 10%, vorzugsweise ≥ 25% bis 50%, besonders bevorzugt ≥ 75% oder ca. 100% des mittleren oder maximalen Abstandes der Filterwände in deren Stapelrichtung betragen. Der Begriff "Stapelrichtung" bezieht sich hierbei lediglich auf die Aufeinanderfolge der Filterwände und ist unabhängig von dem Herstellungsvorgang, so dass auch zylindrische Filterkörper mit umfasst sind, bei welchen die Filterwände in Umfangsrichtung aufeinander folgen. Im Falle zylindrischer Filterkörper kann entsprechend der mittlere oder maximale Filterwandabstand auf Höhe des halben Filterdurchmessers herangezogen werden.

Es versteht sich, dass die Kanal- bzw. Spalthöhe der durch benachbarte Filterwände gebildeten Filtertaschen, in welchen das zu reinigende Fluid in den Filterkörper einströmt, in Durchströmungsrichtung konstant sein oder in Richtung auf das Ausströmende zu- oder abnehmen kann.

Vorzugsweise weisen die Strömungskanäle für das zu reinigende Fluid, insbesondere wenn diese spaltförmig ausgeführt sind, an dem ausströmseitigen Ende eine Höhe a größer 0 auf, beispielsweise ≥ 10%, vorzugsweise ≥ 25% bis 50%, besonders bevorzugt ≥ 75% der mittleren oder maximalen Höhe der Strömungskanäle oder Filtertaschen in Durchströmungsrichtung.

Eine besonders einfache Bauweise eines Filterkörpers ergibt sich, wenn dieser aus einem mäanderförmig abgelegten Band aus Filtermaterial besteht, wodurch der Filter nicht nur kostengünstig sondern auch mit hoher Dichtigkeit und hoher Stabilität insbesondere auch bei thermischen und/oder mechanischen Wechselbeanspruchungen herstellbar ist. Die Umlenkbereiche weisen daher vorzugsweise eine gewisse Steghöhe auf, um bereits an den Umlenkbereichen eine gewisse Spalthöhe zu erzeugen. Für die Steghöhe können die obigen Angaben für die ausströmseitige Höhe a der Strömungskanäle oder Filtertaschen entsprechend gelten.

Vorzugsweise ist die Spülfluideintrittsöffnung an einer Seite des Filterkörpers angeordnet, die von der Einström- und Ausströmseite des Filters verschieden ist, vorzugsweise an einer Seitenfläche des Filters. Vorzugsweise ist ferner die Spülfluidaustrittsöffnung an einer Außenfläche des Filters angeordnet, welche von der Einström- und Ausströmseite des Filters für das zu reinigende Fluid verschieden ist. Spülfluideintrittsöffnung und Spülfluidaustrittsöffnung können insbesondere an gegenüberliegenden Seiten des Filters angeordnet sein, insbesondere jeweils an einer lateralen Seitenfläche des Filters, ohne hierauf beschränkt zu sein. Gegebenenfalls kann auch entweder die Spülfluideintrittsöffnung oder die Spülfluidaustrittsöffnung an der Einströmseite des Filterkörpers angeordnet sein bzw. mit der Einströmöffnung für das zu reinigende Fluid identisch sein.

Der Spuilfluidkanal erstreckt sich vorzugsweise derart durch den Filter, um auf möglichst kurzem Strömungspfad den gesamten Filter in einer Richtung quer zu der Durchströmungsrichtung des zu reinigenden Fluids zu erfassen.

Vorzugsweise ist jedem der bezogen des zu reinigenden Fluids einströmseitig offenen Filtertaschen, welche durch gegenüberliegende Filterwände gebildet werden, jeweils ein Spülfluidströmungskanal zugeordnet, in welchem das Spülfluid quer zur Durchströmungsrichtung des zu reinigenden Fluids den Filter passieren kann.

Vorzugsweise wird das Spülfluid in seitlich offene Bereiche der Strömungskanäle oder Filtertaschen für das zu reinigende Fluid, die im Bereich der Spülfluideinström- und/oder -auströmöffnung insbesondere spaltförmig ausgeführt sein können, eingeleitet. Die Einström- und/oder -ausströmbereiche für das Spülfluid können auch einen geringen Strömungswiderstand aufweisen als die Filterwände, so dass beispielsweise grobmaschige Strukturen mit nur geringem Strömungswiderstand in den genannten Bereichen vorgesehen sein können, beispielsweise um die Filterwände zu stabilisieren. So kann auch der Spülfluideinlass in den Filterkörper - zumindest während des Spülen mit Spülfluid - vollständig partikeldurchlässig sein.

Die Querrichtung, in welcher das Spülfluid zu der Durchströmungsrichtung des zu reinigenden Fluids geführt wird, kann insbesondere im Wesentlichen orthogonal zu dieser sein. Es versteht sich, dass die Spülfluidströmungskanäle auch eine andere Orientierung aufweisen können, beispielsweise schräg zu den Durchströmungskanälen für das zu reinigende Fluid angeordnet sein. Die Spülfluideinlässe und -auslässe können gegenüberliegend an dem Filterkörper angeordnet sein, sie können jedoch auch in Längsrichtung desselben versetzt sein.

Die Spülfluidströmungskanäle können auch gewisse Verzweigungen aufweisen. Ist somit beispielsweise der Filterkörper aus invers zueinander angeordneten strukturierten Filterwänden aufgebaut, so dass Wellenberge und Wellentäler benachbarter Filterwände einander zugewandt sind, so können Spülfluidströmungskanäle dadurch bereitgestellt werden oder eine größere Höhe aufweisen, wenn die Wellenberge und/oder Wellentäler jeweils Einbuchtungen unter Vergrößerung des Abstandes zwischen diesen aufweisen. Hierdurch können auch verzweigte Spülfluidströmungskanäle erzeugt werden.

Besonders bevorzugt kreuzen die Spülfluidströmungskanäle sich zumindest im Wesentlichen über die gesamte Breite des Filterkörpers erstreckende spaltförmige Bereiche der Strömungskanäle für zu reinigendes Fluid, d.h. das Fluid wird quer zur Durchströmungsrichtung des zu reinigenden Fluids durch derartige spaltförmige Kanäle geleitet. Das Spülfluid kann hierbei auf gegenüberliegenden Seiten des Filterkörpers jeweils an denselben spaltförmigen Strömungskanälen dem Filterkörper zugeführt und abgeführt werden, wozu entsprechend gestaltete Zuleitungen /Ableitungen vorgesehen sind.

Die Breite der Spülfluideinlässe und -auslässe kann sich nur über eine relativ geringe Erstreckung des Filterkörpers ausdehnen können, beispielsweise nur über weniger als 1/5 oder 1/10 dessen Länge, wobei sich dennoch die Breite der Spülfluidströmungskanäle über die gesamte Erstreckung des Filterkörpers, beispielsweise im Wesentlichen dessen gesamte Länge, erstrecken können.

Vorzugsweise sind die zur Ausströmseite des Filterkörpers hin offenen Strömungskanäle bzw. Filtertaschen für zu reinigendes Fluid von den Spülfluidströmungskanälen zumindest teilweise oder vollständig fluidentkoppelt, d.h. der Spülfluidstrom wird derart durch den Filterkörper geführt, dass dieser nicht (oder möglichst wenig) an der Ausströmseite des Filters austritt. Der Spülfluidstrom wird hierzu nicht durch die zum Ausströmende hin offenen Filtertaschen geleitet oder es sind geeignete Strömungsumlenkmittel oder Absperrmittel vorgesehen. Vorzugsweise ist der Druckverlust des Spülfluids bei Durchführung der Regeneration oder bei nicht mit Partikeln beladenem Filter zwischen Spülfluideinlass und -auslass geringer als bei Abströmung durch die Filteraustrittsseite.

Zur Entkoppelung der ausströmseitigen Strömungskanäle von den Spülfluidströmungskanälen können die Seitenwände des Filterkörpers an geeigneten Stellen mit entsprechenden Ausnehmungen versehen sein. Gegebenenfalls kann hierzu auch ein Lochblech oder Schieber an der jeweiligen Seitenwand des Filters angeordnet sein, um für das Spülfluid an den gewünschten Kanälen Einführöffnungen bereitzustellen und die ausströmseitigen Kanäle zu verschließen.

Eine Vielzahl von Ausführungen des erfindungsgemäßen Filterkörpers ist möglich, wobei die Filterwände beispielsweise aus einem durch Deformation strukturierbaren Flächengebilde wie einem Drahtgeflecht oder dergleichen bestehen können, was insbesondere in Form eine endlosen Bandes aber auch einzelner Filterplatten vorliegen kann. Das durchströmbare Trägermaterial kann mit sinterbaren Teilchen wie Metall- oder Keramikteilchen beschichtet sein, wobei die Porenstruktur des Filters durch das Sintermaterial bereitgestellt werden kann. Der Filterkörper kann aber auch ein Sinterkörper aus Metall, keramischen Materialien einschließlich Siliziumkarbid oder anderen Materialien sein.

Wird der Filterkörper aus einzelnen Lagen von Filterwänden aufgebaut, was sowohl durch ein mäanderförmig abgelegtes Band aus Filtermaterial als auch durch Anordnung und Verbindung separater Filterwandstücke erzielt werden kann, so können partikeldichte Seitenwände durch Abfaltung und partikeldichte Fügung von Seitenbereichen des Bandes oder der jeweiligen Filterwände erzeugt werden. Bei dieser Bauweise können dann Seitenbereiche des Filters abgefaltet sein, beispielsweise um ca. 180°, um Spülfluideinlässe in einströmseitig offene Strömungskanäle für zu reinigendes Fluid zu erzeugen und ausströmseitig offene Strömungskanäle zumindest teilweise oder vollständig für das Spülfluid zu verschließen.

Spülfluideinlass und/oder Spülfluidauslass an dem Filterkörper können durch Versteifungselemente verstärkt sein. Hierzu können Seitenwandbereiche der jeweiligen Filterwände, die einander überlappen, seitlich abgefaltet sein, wodurch die derart ausgebildeten Laschen an einem Gehäuse oder dergleichen festgelegt werden können, derartige Laschen können auch zur Festlegung anderer Versteifungselemente wie Drähte oder Bänder vorgesehen sein, die sich über die gesamte Ausdehnung des Filterkörpers in der jeweiligen Richtung, z. B. dessen Höhe, erstrecken können.

Der Spülfluideinlass und/oder -auslass sind vorzugsweise im Bereich oder unmittelbar an dem auströmseitigen Ende des Filterkörpers bzw. der Strömungskanäle oder Filtertaschen angeordnet.

Vorzugsweise ist ein Partikelspeicher vorgesehen, welcher fluidführend mit dem Fluidstromauslass des Filterkörpers verbunden ist, so dass die durch den Spülfluidstrom von dem Filterkörper abgeführten Partikel in dem Partikelspeicher angesammelt werden können. Die Partikel können hierbei von dem Spülfluidstrom in dem Partikelspeicher separiert werden oder gegebenenfalls auch in einer stromaufwärts angeordneten separaten Einrichtung. Der Partikelspeicher kann beispielsweise ein vlies- oder filzartiges Material zur Abtrennung und zum Zurückhalten der Partikel aufweisen. Das Filtermaterial des Partikelspeichers kann kostengünstiges Einwegmaterial sein, so dass eine Regeneration des Partikelspeichers nicht vorgenommen werden muss. Die Kapazität des Partikelspeichers für die abgetrennten Partikel kann die Kapazität des Filters bis zur Erreichung dessen Regeneration um ein mehrfaches übersteigen, beispielsweise um das 2- bis 5- fache, bis 10-fache oder mehr, so dass die Regenerationsintervalle des Filtersystems insgesamt deutlich erhöht werden können.

Es versteht sich, dass geeignete Ventile oder Absperreinrichtungen an den jeweiligen Strömungskanälen des Filtersystems vorgesehen sein können, um eine Regeneration effektiv durchführen zu können, so können beispielsweise Strömungseinlass- und/oder -auslass des Filters für zu reinigendes Fluid durch entsprechende Ventile abgesperrt werden, wenn Spülfluid durch den Filterkörper zur Regeneration desselben durchgeleitet wird. Spülfluideinlass und/oder Spülfluidauslass können mit entsprechenden Ventilen versehen sein, wenn der Filter im normalen Betriebszustand ist. Ferner können beispielsweise Einrichtungen wie Schieber vorgesehen sein, um den Filterkörper zum Spülfluideinlass und -auslass hin partikeldicht abzuschliessen und ein unkontrolliertes Entweichen von Partikeln aus dem Filterkörper zu vermeiden. Entsprechend können dem Partikelspeicher Ventile zugeordnet sein, so dass dieser partikeldicht oder fluiddicht verschließbar ist, wenn die Regeneration beendet wird, um ein Entweichen von Partikeln zu verhindern.

Ferner kann eine Heizeinrichtung zur Erwärmung des der Spülfluideinströmöffnung zugeführten Spülfluids vorgesehen sein. Durch die Erwärmung kann die Regeneration des Filters bei der thermischen Aufbereitung der Filterrückstände, wie beispielsweise einer Veraschung derselben wesentlich beschleunigt werden. Es versteht sich, dass die Erwärmung des Spülfluids zusätzlich oder alternativ zu einer Erwärmung der Filterrückstände durch eine unmittelbar die Filterwände erwärmende Heizeinrichtung vorgesehen sein kann, durch welche eine Selbstentzündung der abgeschiedenen Partikel erfolgt. Die durch die Erwärmung des Spülfluids dem Filter zugeführte Wärme kann ≥ ca. 50%, ≥ ca. 75% oder im Wesentlichen die gesamte zur thermischen Aufbereitung der Filterrückstände notwendigen Wärmemenge darstellen.

Ferner kann ein Temperatursensor zur Messung der Temperatur der Filterwände und/oder eines des Filterkörper durchströmenden Fluids vorgesehen sein, wobei vorzugsweise die Temperatur von aus dem Filterkörper ausströmendem, gereinigtem Fluid gemessen wird. In Abhängigkeit dieser Temperatur kann mittels einer Spülfluidzuführeinrichtung die Spülfluidzufuhr und/oder die Temperatur des Spülfluidstroms gesteuert oder geregelt werden. Hierdurch ist es möglich, Überhitzungen des Filterkörpers bei der thermischen Aufbereitung der Filterrückstände während der Regeneration zu verhindern, da der Abbrand der abgeschiedenen Partikel exotherm ist und zu hohe Temperaturen den Filterkörper beschädigen können.

Ferner kann eine Einrichtung zur Steuerung der Regeneration des Filters durch Spülen mit Spülfluid vorgesehen sein, die die Regeneration in Abhängigkeit von Zustands- und/oder Betriebsparametern des Filters und/oder einer der Filter zugeordneten Maschine, welche die abzutrennenden Partikel erzeugt, vorgesehen sein. Die Regeneration des Filters ist somit an der jeweiligen Maschine unabhängig von anderen Einrichtungen wie einem Regenerationsstand einer Werkstatt durchführbar. Dies ist insbesondere bei Kraftfahrzeugen von herausragender Bedeutung, da hierdurch Werkstattzeiten drastisch vermindert werden. Die Steuerungseinrichtung kann insbesondere derart konfiguriert sein, dass der Spülvorgang bei währendem Betrieb der Maschine bzw. des Verbrennungsmotors erfolgt. Selbstverständlich kann die Regeneration auch in Intervallen durchgeführt werden, wobei aufgrund der Gefahr einer Überhitzung des Filters die Regeneration bei Teillastbetrieb, im Leerlauf der Brennkraftmaschine oder in einem anderen geeigneten Betriebszustand durchgeführt werden kann.

Vorzugsweise sind einer oder mehrere oder sämtliche Bestandteile der Regenerationseinrichtung dauerhaft mit der partikelbeladene Abgase erzeugenden Einrichtung oder Anlage wie beispielsweise einem Kraftfahrzeug, einer Verbrennungsmaschine oder einer Industrieanlage versehen, so dass eine von anderen Einrichtungen unabhängige Regeneration durchführbar ist oder zumindest wesentliche Komponenten der Regenerationseinrichtung bereits an der die Abgase erzeugenden Einrichtung oder Anlage vorgesehen sind. Derartige Komponenten können insbesondere der Partikelspeicher, die Heizeinrichtung zur Erwärmung von Spülfluid und/oder die Regenerationssteuereinrichtung sein, gegebenenfalls auch Sensoren wie Temperatur- und Drucksensoren zur Drucküberwachung des Spülfluidstroms oder des Stroms an zu reinigenden Abgasen. Bei beweglichen Einrichtungen werden diese somit mitgeführt. Ferner kann eine Druckerzeugungseinrichtung zur Erzeugung des notwendigen Spülfluiddrucks an der jeweiligen Einrichtung oder Anlage dauerhaft angeordnet sein, wobei die Druckerzeugungseinrichtung einen Kompressor und gegebenenfalls auch einen Druckspeicher aufweisen kann. Der Kompressor kann hierbei bereits für andere Zwecke an der Einrichtung oder Anlage vorgesehen sein, beispielsweise ein bereits vorhandener Kompressor eines Kraftfahrzeuges. Gegebenenfalls können außer der Druckerzeugungseinrichtung bereits alle Komponenten der Regenerationseinrichtung an der Einrichtung oder Anlage vorgesehen sein, gegebenenfalls auch einschließlich eines Druckspeichers, durch den der von einem Kompressor erzeugte Druck zeitweilig aufrechterhalten werden kann.

Die dem Partikelfilter zugeordnete Einrichtung oder Anlage kann insbesondere ein Dieselmotor eines Kraftfahrzeuges, Schiffsmotors oder eine andere Verbrennungskraftmaschine, ein Kraftwerk oder eine andere technische Anlage sein, die Partikel oder Stäube erzeugt.

Die Erfindung wird nachfolgend anhand der Zeichnungen beispielhaft beschrieben und erläutert. Es zeigen:
- Figur 1: eine schematische Gesamtdarstellung eines erfindungsgemäßen Partikelfilters mit Regenerationssystem,
- Figur 2: eine Darstellung des Filterkörpers mit Gehäuse gemäß Figur 1 in verschiedenen Ansichten
- Figur 3: eine Detailansicht des Filterkörpers gemäß Figur 2 im endgültig gefalteten Zustand (rechts) und im teilweise gefalteten Zustand (links),
- Figur 4: verschiedene Ansichten eines erfindungsgemäßen zylinderförmigen Filterkörpers.

Der erfindungsgemäße Partikelfilter 1 mit Regenerationssystem besteht aus einer Vielzahl von Filterwänden 2 zum Abtrennen von Partikeln wie z.B. Rußpartikeln aus einem Abgasstrom einer Verbrennungskraftmaschine wie eines Dieselmotors. Die Filterwände bestehen hier aus einem offenem Trägermaterial wie einem Drahtgeflecht mit aufgesintertem Filtermaterial. Der Filter aber auch ein Sinterkörper aus Metall, keramischen Materialien wie Siliziumkarbid oder dergleichen sein. Die Filterwände 2 bilden hierbei einen Filterkörper 3, welcher mit einem Einlassstutzen 5 und Auslassstutzen 6 versehenen Gehäuse 4 angeordnet ist, wodurch Einströmseite 7 und Ausströmseite 8 des Filters definiert werden.

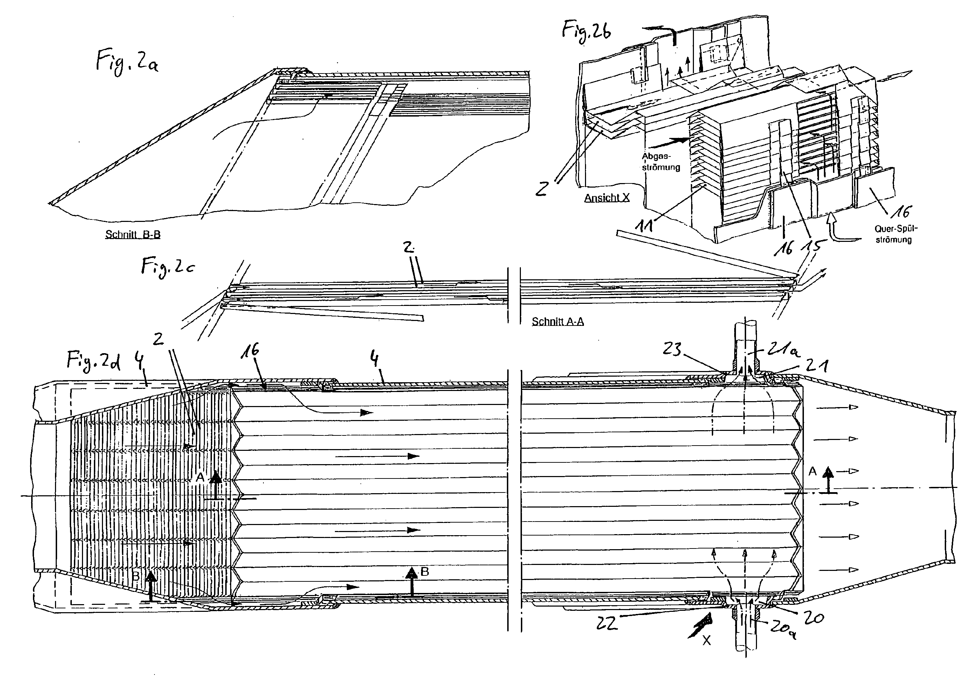

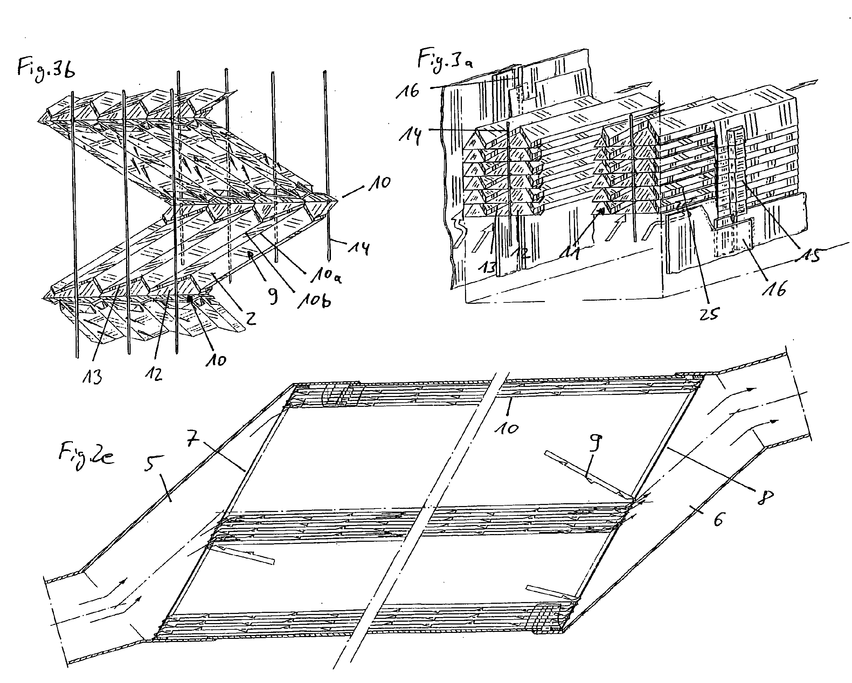

Die Filterwände 2 sind hier aus einem profilierten, durchgehenden Band 9 erzeugt (Fig. 3), welches mäanderförmig abgelegt wird, so dass eine Vielzahl oder sämtliche Filterwände 2 des Filterkörpers durch das Band gebildet werden. Die Umlenkbereiche 10 sind hierbei einströmseitig und ausströmseitig angeordnet, wodurch ein Filterkörper hoher Dichtigkeit erzielt werden kann. Die Filterwände sind zur Erhöhung der Steifigkeit und zur Beeinflussung der Strömungseigenschaften der fluiden Medien mit Profilierungen in Form von Wellenbergen 10a, 10b und Wellentälern versehen, die gegebenenfalls jedoch auch anders ausgeführt sein oder entfallen können. Die Filterwände werden hierbei derart zueinander angeordnet, dass zwischen diesen sich über die gesamte Längserstreckung und Quererstreckung des Filterkörpers durchgehende spaltförmige Filtertaschen 11 ausbilden, die wechselweise zur Einströmseite 7 oder zur Ausströmseite 8 hin offen sind. Die Filtertaschen erstrecken sich hierbei über die gesamte Filterkörperlänge und -breite mit gleichbleibender Spalthöhe. Einströmseitig und ausströmseitig sind die Filterwände ferner mit Abflachungen 12 im Einströmbereich und Ausströmbereich versehen, welche durch in Filterlängsrichtung vor- und zurückspringende stegartige Bereiche 13 ausgebildet werden, wodurch das Einströmverhalten des Fluids in den Filter verändert, die Filterwände zusätzlich stabilisiert und gegebenenfalls der Filterwandabstand eingestellt werden kann. Die Durchströmungsrichtung des zu reinigenden Fluids (Pfeile, Fig. 2c) entspricht hierbei der Längsrichtung des mäanderförmig abgelegten Filterbandes, sie kann jedoch auch von dieser verschieden sein, beispielsweise quer oder senkrecht zu dieser.

Es versteht sich, dass durch geeignete Ablage oder Profilierung der Filterwände sich die spaltförmigen Bereiche auch jeweils nur über einen Teil der Filterlänge erstrecken können. Ferner können die Profilierungen auch wellenförmige oder quer zur Filterlängsachse verlaufende Rippen aufweisen oder anders ausgebildet sein.

Der Filterkörper kann durch zusätzliche Versteifungselemente stabilisiert werden, die beispielsweise in Form von außenseitig angeordneten Drähten 14, laschenförmigen Ausklinkungen 15, welche an dem Gehäuse an Befestigungsbereichen 16 lastabtragend festgelegt sein können, durch parallel zu den Filterwänden erstreckenden länglichen Versteifungselementen (nicht dargestellt) oder dergleichen stabilisiert sein. Die Versteifungselemente können jeweils reibschlüssig oder auch stoffschlüssig oder auf andere Weise an dem Filterkörper befestigt sein. Die Versteifungselemente sind insbesondere jeweils an den Einström- und Ausströmseiten oder auch an den Einström- und Ausströmbereichen des Spülfluids angeordnet.

Um das Einströmen des zu reinigenden Fluids (siehe Pfeile, Fig. 2d) in den Filterkörper zu erleichtern und Druckverluste zu vermeiden ist der Filterkörper 3 im Einströmbereich mit seitlich offenen Wandbereichen 16 versehen, die unmittelbar an die Einströmseite 7 angrenzen oder gegebenenfalls auch axial beabstandet sein können. Als Durchströmungsrichtung des Fluids im Sinne der Erfindung ist jedoch die Strömungsrichtung des Hauptvolumenstroms anzusehen, die unabhängig von dem Einström- und/oder Ausströmbereich zu sehen ist und hier durch die Längsrichtung des Filterkörpers definiert wird.

Zur Regeneration des erfindungsgemäßen Partikelfilters sind an den Seitenflächen, die jeweils zwischen Einström- und Ausströmseite des Filters angeordnet sind, eine Spülfluideintrittsöffnung 20 und eine Spülfluidaustrittsöffnung 21 vorgesehen, die, gegebenenfalls unter Anordnung von Strömungsumlenkmitteln, derart angeordnet sind, dass die Filtertaschen über die gesamte Filterhöhe hin möglichst gleichmäßig mit Spülfluid beaufschlagt werden. Das Spülfluid wird hierzu über die Zuleitung 20a zum Filterkörper zugeführt und über die Ableitung 21a abgeführt. Ferner sind gemäß dem Ausführungsbeispiel Spülfluidzuleitung 20a und Anleitung 21a in der Höhe versetzt zueinander angeordnet, wobei ferner dem Spülfluideinlass ein Prallblech oder eine andersartige Strömungsumlenkung vorgelagert sein kann, die sich auch über einen größeren Bereich der Filterhöhe erstrecken kann. Des Weiteren sind an Spülfluideinlass und -auslass 20, 21 Verteiler 22, 23 vorgesehen, die den Fluidstrom über die gesamte Höhe des Filters, nach Möglichkeit gleichmäßig, verteilen. Die Begriffe "Höhe" und "Breite" des Filters beziehen sich hier auf die Darstellung der Figuren, es versteht sich, dass bei anderer räumlicher Orientierung des Filters die Angaben entsprechend zu ändern sind.

Dadurch, dass das Spülfluid quer, genauer gesagt orthogonal, zu der Durchströmungsrichtung des zu reinigenden Fluids durch die Filtertaschen geleitet wird, können in den Filtertaschen abgelagerte Partikel besonders einfach durch den Spülfluidauslass entfernt und so der Filter regeneriert werden. Der Spülfluidstrom wird hierbei quer zu der Durchströmungsrichtung des zu reinigenden Fluids jeweils den einzelnen Filtertaschen zugeführt. Spülfluidstromeinlass und -auslass sind hierbei an dem ausströmseitigen Ende des Filters angeordnet, es versteht sich, dass diese gegebenenfalls auch in Filterlängsrichtung bzw. Durchströmungsrichtung versetzt angeordnet sein können, wobei insbesondere der Spülfluideinlass bezogen auf die Durchströmungsrichtung stromaufwärts des Spülfluidauslasses angeordnet sein kann. Der Spülfluidstrom wird hierbei jeder der einzelnen einströmseitig offenen Filtertaschen zugeführt und zwar jeweils vorzugsweise auf Höhe der spaltförmigen und seitlich offenen Bereiche derselben, wobei sich die Spalte über die gesamte Breite des Filterkörpers bzw. den gesamten Strömungspfad des Spülfluids durch den Filterkörper erstrecken. Die Spalthöhe wird hierbei entlang des Spülfluidströmungspfades um vorzugsweise nicht mehr als 50% der maximalen oder mittleren Spalthöhe eingeengt und bleibt nach dem Ausführungsbeispiel im Wesentlichen konstant. Der Spülfluideinlass und unabhängig hiervon nach dem Ausführungsbeispiel auch der Spülfluidauslass sind an dem ausströmseitigen Bereich des Filters angeordnet, da sich hier verstärkt abzutrennenden Partikeln wie Ruß ablagern. Dadurch, dass der Spülfluidstrom hier quer, insbesondere senkrecht, zu der Längsrichtung des mäanderförmig abgelegten Filtermaterialbandes angeordnet ist, kann ein stabiler Filter hoher Dichtigkeit bereitgestellt werden, der leicht regenerierbar ist. Allgemein können Spülfluideinlass und -auslass bzw. die Spülfluidströmungskanäle an den Bereichen des Filterkörpers angeordnet sein, an denen mit verstärkten Partikelablagerungen zu rechnen ist.
Die Regeneration des Filters wird ferner dadurch erleichtert, dass die einströmseitig offenen Kanäle oder Filtertaschen zur Durchleitung von zu reinigendem Fluid im Bereich des Strömungspfades des Spülfluids bzw. des Spülfluideinlasses und/oder - auslasses 20, 21 eine Spalthöhe aufweisen, die ≥ 25% (oder ≥ 50% oder 75%) und nach dem Ausführungsbeispiel ca. 100% der mittleren oder auch maximalen Strömungskanalhöhe für das zu reinigende Fluid in Durchströmungsrichtung beträgt. Die Filterwände 2 sind somit im Bereich der Spülfluidströmungspfade bzw. im Bereich der ausströmseitigen Verbindungsbereiche der Filterwände in der Höhe voneinander beabstandet. Diese Bereiche werden nach dem Ausführungsbeispiel durch die stegartigen Bereiche 13 bzw. die Umlenkbereiche des mäanderförmig abgelegten Bandes des Filtermaterials bereitgestellt. Es versteht sich, dass entsprechendes auch dann gilt, wenn separate Filterwände miteinander durch entsprechende Fügestellen partikeldicht miteinander verbunden werden oder der Filterkörper auf andere Weise aufgebaut wird. Spitz zusammenlaufende Filterwände im Bereich des ausströmseitigen Filterkörperendes, die zu engen Spalten und damit hohen Druckverlusten bei einer Querströmung eines Spülfluids führen würden, werden jedoch hierdurch vermieden.

Da sich die beiden Spülfluidverteiler 22, 23, was gegebenenfalls auch nur für einen derselben gelten kann, über einen Bereich der Filterlängsachse bzw. Durchströmungsrichtung des zu reinigenden Fluids erstrecken, der größer als die Weite des Spülfluideinlasses bzw. -auslasses 20, 21 ist, ist die Spülung des Filters sehr effektiv möglich.

Da das Spülfluid nur den einlassseitig offenen Filtertaschen zuzuführen ist, in welchen sich Partikel angesammelt haben, sind die auslassseitig offenen Filtertaschen von dem Spülfluidkanal mehr oder weniger vollständig abgetrennt, um eine effektive Regeneration des Filters zu ermöglichen. Zur Entkoppelung der Spülfluidkanäle von dem Filterauslass sind die Randbereiche 25 des Filtermaterialbandes abgefaltet und umgebördelt, um partikeldichte Seitenwände der ausströmseitig offenen Filtertaschen zu bilden. Es versteht sich, dass gegebenenfalls auch eine nur teilweise seitliche Verschließung der jeweiligen Filtertaschen und damit eine teilweise Entkoppelung ausreichend sein kann. Um fluiddichte Rand- bzw. Seitenwandbereiche auszubilden kann beispielsweise das ausgesinterte Filtermaterial in größerer Schichtdicke auf dem Träger aufgebracht sein. Beispielsweise können die Seitenwände des Filters auf Höhe von Einström- und Ausströmseite der Spülfluidkanäle auch mit entsprechenden Lochblechen mit geeigneten, insbesondere schlitzförmigen, Eintrittsöffnungen für das Spülfluid ausgeführt sein. Entsprechende separate Strömungsumlenkbleche können ohne Weiteres jeweils seitlich an dem Filter angeordnet sein.

Ferner sind im Bereich von Spülfluideinlass und -auslass 20, 21 an dem Filterkörper Versteifungselemente angebracht, die hier in Form von seitlich abgewinkelten Laschen ausgeführt sind, welche einstückig an den Filterwänden bzw. den die partikeldichten Seitenwände aufbauenden Bereichen des Filterbandes angeformt sind. Diese Laschen sind ferner an dem Gehäuse an den Befestigungsbereichen 16 kraftaufnehmend festgelegt. Die Spülfluideinlass- und auslassbereiche und insbesondere auch die Filterwände in diesen Bereichen werden hierdurch stabilisiert.

Das Regenerationssystem umfasst des Weiteren einen Partikelspeicher 30, der fluidführend mit dem Spülfluidauslass 21 verbunden werden kann, um von dem Spülfluid vom Filter ausgespülte Partikel zu speichern. Das Speichervermögen des Partikelspeichers ist hierbei ein Vielfaches höher als das des Filters. Der Partikelspeicher kann ein kostengünstiges Speichermedium wie beispielsweise ein Vlies oder Filz, Glas- bzw. Steinwolle oder dergleichen aufweisen, um die Partikel zurückzuhalten. Das Speichermedium des Partikelspeichers ist hierbei ein Einwegmaterial. Die Partikel können in dem Partikelspeicher von dem Fluid abgetrennt werden, gegebenenfalls auch in einer separaten vorgeschalteten Trenneinrichtung. Der Partikelspeicher kann durch Ventile, durch eine Schnellkupplung 32 oder dergleichen im Bedarfsfall fluidführend mit dem Spülfluidauslass verbunden oder an dem Regenerationssystem angekoppelt werden. Der Partikelspeicher kann an der jeweiligen Maschine, Kraftfahrzeug oder dergleichen dauerhaft montiert sein oder gegebenenfalls Teil einer separaten und Maschinen-unabhängigen Regenerationseinrichtung beispielsweise einer Werkstatt sein.

Der Spülfluidstrom wird nach dem Ausführungsbeispiel im Kreislauf geführt, wozu eine Rückführleitung 34 vorgesehen ist, gegebenenfalls kann das System jedoch auch offen ausgeführt sein, so dass gereinigtes Spülfluid in die Umgebung abgelassen wird.

Das Regenerationssystem weist des Weiteren eine Spülfluiddruckbeaufschlagungseinrichtung auf, die hier aus einem Kompressor 35 und einem Druckspeicher 36 besteht. Kompressor und gegebenenfalls auch der Druckspeicher können hier ebenfalls an der jeweiligen Maschine dauerhaft vorgesehen oder gegebenenfalls Teil eines Maschinen-unabhängigen Systems sein. Die Spülfluiddruckbeaufschlagungseinrichtung bzw. der Druckspeicher können zum Filter bzw. zum Partikelspeicher hin durch Ventil abgetrennt sein.

Ferner ist eine Heizeinrichtung 37 vorgesehen, so dass aufgeheiztes Spülfluid dem Filter zur Regeneration zugeführt werden kann. Die abgeschiedenen Partikel können hierdurch in dem Filter zumindest teilweise oder vollständig thermisch versetzt oder verascht werden, um die Abfallmenge zu reduzieren. Es versteht sich, dass eine zusätzliche Heizeinrichtung vorgesehen sein kann, die unmittelbar die Filterwände, einen benachbarten Gehäusebereich oder dergleichen erwärmt, um die thermische Zersetzung bzw. Veraschung zu unterstützen, nach dem Ausführungsbeispiel wird jedoch mehr als die Hälfte oder die gesamte zur thermischen Regeneration des Filters notwendigen Wärme durch die Spülfluidheizung 37 bereitgestellt.

Da die thermische Zersetzung bzw. Veraschung der Partikel in dem Filter exotherm verläuft, ist ein Temperatursensor 38 vorgesehen, welcher über die Steuerung 39 mit der Heizeinrichtung 37 gekoppelt ist, so dass beispielsweise bei Selbstentzündung der Partikel die Leistung der Heizung 37 zurückgefahren werden kann. Ferner werden das Ventil sowie der Kompressor durch die Steuerung 39 betätigt.

Des Weiteren sind Drucksensoren 40 vorgesehen, die hier einströmseitig und ausströmseitig angeordnet sind, um Druckverluste über den Filter zu bestimmen und hierdurch den Bedarf einer Regeneration und/oder eine ausreichende Regeneration des Filters anzuzeigen. Der hierfür notwendige Fluidstrom kann ein gegebenenfalls partikelbeladener Abgasstrom der Maschine sein, ein Spülfluidteilstrom oder ein anderer geeigneter Fluidstrom.

Ferner kann das Regenerationssystem eine Einrichtung zur Dosierung eines Additivs aus einem Additiv-Vorratsbehälter 45 aufweisen, welcher mittels einer Fördereinrichtung 46 und einer Dosiereinrichtung 47 dem Strom des zu reinigenden Fluids zugeführt wird. Hierdurch kann die thermische Regeneration des Filters durch Zersetzung oder Veraschung der Partikel durch das Additiv künstlich beeinflusst werden. Entsprechend können anstelle oder zusätzlich eines Additivs, welches beim Regenerationsvorgang oder in anderen Betriebszuständen des Filters zugefügt werden, auch weitere Hilfsstoffe zur katalytischen Umsetzung von Fluidkomponenten oder dergleichen zugeführt werden. Es versteht sich, dass auch dem Spülfluid geeignete Additive über eine entsprechende Dosiereinrichtung zugeführt werden können. Die einzelnen Komponenten der Additiv-Zuführeinrichtung können ebenfalls über das Steuergerät 30 gesteuert werden.

Ein besonderer Vorteil des erfindungsgemäßen Filtersystems liegt darin, dass eine Regeneration gegebenenfalls auch bei währendem Betrieb der jeweiligen Maschine durchgeführt werden kann. Ferner können einlassseitig und/oder auslassseitig des Filters weitere Ventile vorgesehen sein, um die Fluidströmungskanäle abzutrennen und ein Abströmen von Spülfluid von dem Filter zu vermeiden.

Das Spülfluid kann Luft, Abgase der jeweiligen Einrichtung oder Maschine oder ein anderes geeignetes Fluid sein.

Selbstverständlich kann die Regeneration des Filters auch in bestimmten Intervallen erfolgen, wobei beispielsweise ein Regenerationsbedarf durch das Steuergerät angezeigt werden kann, beispielsweise aufgrund eines durch die Drucksensoren 40 festgestellten Druckverlustes in Durchströmungsrichtung.

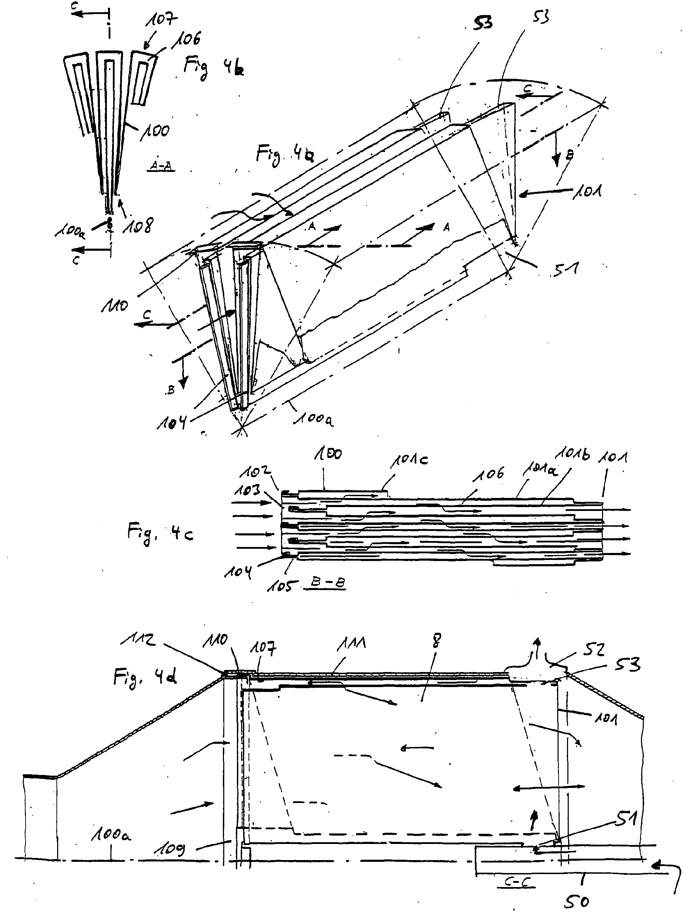

Figur 4 zeigt eine weitere Variante eines Partikelfilters, bei welchem ein Filtermaterialband 100 entlang einer parallel zur Bandlängsrichtung verlaufenden Faltungslinie 101 unter Ausbildung einer Lagendoppelung bezogen auf die Faltungslinie gefaltet ist, die einen stirnseitig, d.h. einström- oder - nach dem Ausführungsbeispiel - ausströmseitig angeordneten, Umlenkbereich bildet. Schnitte der Anordnung nach Fig. 24a entlang den Linien A-A, B-B und C-C sind in den Figuren 24b-d, nach Fig. 24d mit zusätzlichem Gehäuse, dargestellt. Die freien Seitenkanten des Filterbandes sind jeweils mit Seitenkanten einer benachbarten Lagendoppelung unter Ausbildung von Falzen 104, gegebenenfalls auch durch Schweißverbindungen, erzeugt, die die Filtertaschen partikeldicht abschließen. Die einströmseitig, gegebenenfalls anstelle hiervon auch ausströmseitig, aufeinander folgende Verbindungsbereiche 102, 103 der Randbereichen von Filterwänden benachbarter Ladendoppelungen können hierbei, wie dargestellt, gegeneinander vor- und zurückspringend angeordnet. Die Filterwände 101a und 101b werden somit, entsprechend der Terminologie der Erfindung, derselben Lagendoppelung zugeordnet, die Filterwände 101b und 101c verschiedenen Lagendoppelungen. Den Falzungen nachgelagert sind flächige Anlagebereiche 105 benachbarter Filterwände zur Erhöhung der Partikeldichtigkeit. Die Strömungsrichtung des fluiden Mediums durch die durch die Lagedoppelung ausgebildeten Filtertaschen 106 ist durch die gebogenen Pfeile symbolisiert.

Das derart lagengedoppelte Filtermaterialband wird mäanderförmig gemäß Figur 24a,b unter Erzeugung eines zylinderförmigen oder teilzylinderförmigen Partikelabschnittes abgelegt, in dem radial außenseitig Umlenkbereiche 107 größerer Breite und innenseitig an einer zentralen Achse enge Umlenkbereiche 108 vorgesehen sind. Das mäanderförmig abgelegte Band wird somit um die Filterlängsachse 100a zusammengerollt. Wie in Figur 24d dargestellt, kann das fluide Medium nicht durch die Stirnseite 109 sondern auch von radial außen über den dem Umlenkbereich 107 zugeordneten Bereich der Filtertasche in die Filtertaschen eindringen und ausströmseitig durch die Filtertaschen stirnseitig austreten. Der Partikelfilter kann so einteilig als vollzylindrischer Filter ausgeführt sein. Gegebenenfalls können die Umlenkbereiche 101 auch einströmseitig angeordnet sein. An den radial außenliegenden Umlenkbereichen 107 sind stirnseitig oder auch radial vorstehende Laschen 110 ausgebildet, mittels derer der Filter an dem Gehäuse 111 partikeldicht befestigbar ist, beispielsweise in einer Gehäusetasche 112 einklemmbar ist.

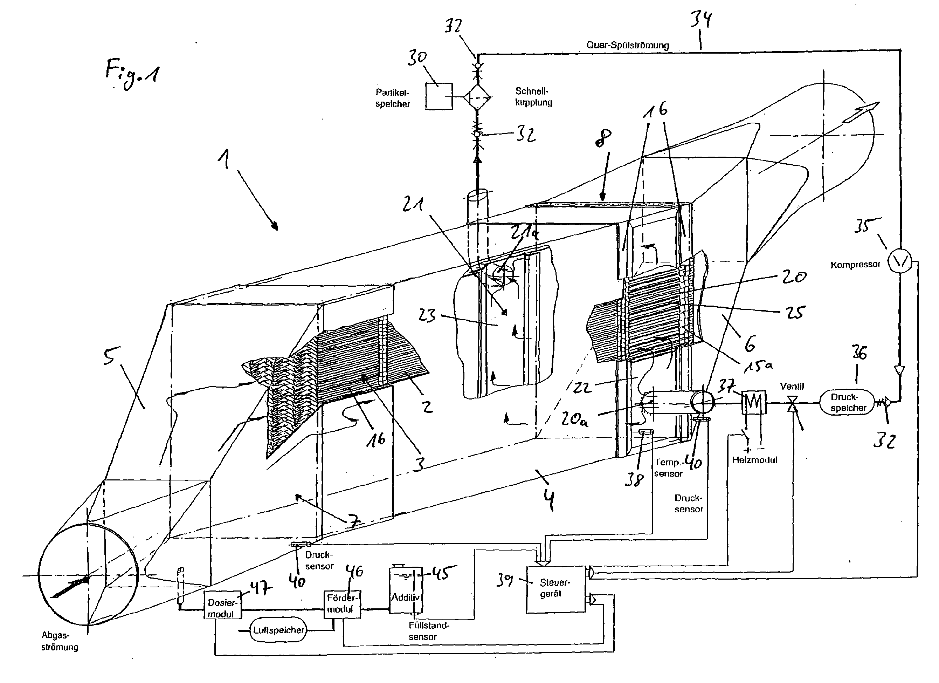

Im Bereich der Achse 100a ist hier eine Spülfluidzuleitung 50 mit einem Spülfluideinlass 51 vorgesehen, wozu die Filterwände entpsrechende Ausnehmungen aufweisen. Durch gegenüberliegende Spülfluidauslässe 53 in den Filtertaschen kann das partikelbeladene Spülfluid einem Sammler 52 zugeführt werden. Der Aufbau der Regenerationseinrichtung im übrigen ist entsprechend dem gemäß Figur 1. Die Ausführungen zu dem ersten Ausführungsbeispiel gelten entsprechend.

## Patentansprüche

1. Partikelfilter, insbesondere für Abgase von Dieselbrennkraftmaschinen, mit einer Vielzahl von von dem Fluid durchströmbaren Filterwänden zum Separieren von Partikeln aus einem Fluidstrom, wobei die Filterwände einen Filterkörper bilden, wobei der Filter eine Einströmseite und eine Ausströmseite aufweist und in einer Durchströmungsrichtung von dem zu reinigenden Fluid durchströmbar ist, **dadurch gekennzeichnet , dass** in einer Richtung quer zu der Durchströmungsrichtung des zu reinigenden Fluids sich durch diesen erstreckende Strömungskanäle für ein Spülfluid mit einer Spülfluideintrittsöffnung und einer Spülfluidaustrittsöffnung vorgesehen sind, durch die mittels des Spülfluids die von den Filterwänden zurückgehaltenen Partikel durch die Spülfluidströmungskanäle aus dem Filterkörper abführbar sind.

2. Partikelfilter nach Anspruch 1, **dadurch gekennzeichnet, dass** eine oder beide Öffnungen der Spülfluideintrittsöffnung und Spülfluidaustrittsöffnung jeweils auf Seiten des Partikelfilters angeordnet sind, die von der Einströmseite und der Ausströmseite des Filterkörpers für das zu reinigende Fluid verschieden sind.

3. Partikelfilter nach Anspruch 1 oder 2, **dadurch gekennzeichnet, dass** über eine Teillänge oder Gesamtlänge des Filterkörpers die Strömungskanäle für zu reinigendes Fluid zumindest im Wesentlichen über die gesamte Breite des Filterkörpers spaltförmig ausgebildet sind.

4. Partikelfilter nach einem der Ansprüche 1 bis 3, **dadurch gekennzeichnet , dass** die Filterwände aus einem durch Deformation strukturierbaren Flächengebilde bestehen, wobei die Vielzahl von Filterwänden des Filters oder eines Filtersegmentes durch ein durchgehendes Band aus Filtermaterial gebildet wird, das unter Ausbildung von Umlenkbereichen zu einem dreidimensionalen Körper abgelegt ist.

5. Partikelfilter nach Anspruch 4, **dadurch gekennzeichnet, dass** die Eintrittsöffnung und Austrittsöffnung für das Spülfluid an Seitenflächen des Partikelfilters vorgesehen sind, die beidseitig von den Umlenkbereichen des Filtermaterialbandes begrenzt werden.

6. Partikelfilter nach einem der Ansprüche 1 bis 5, **dadurch gekennzeichnet , dass** Zuleitungen vorgesehen sind, welche das Spülfluid bezogen auf die Durchströmungsrichtung des zu reinigenden Fluids den seitlich den spaltförmigen Bereichen der Fluidkanäle zuleiten, oder dass Spülfluidableitungen vorgesehen sind, die das Spülfluid seitlich von den spaltförmigen Kanälen für das zu reinigende Fluid abführen, oder dass beide Arten von Leitungen vorgesehen sind.

7. Partikelfilter nach einem der Ansprüche 1 bis 6, **dadurch gekennzeichnet , dass** die Spülfluidströmungskanäle in sich zumindest im Wesentlichen über die gesamte Länge und Breite des Filterkörpers erstreckenden spaltförmigen Bereichen der Strömungskanäle für zu reinigendes Fluid einmünden und von diesen ausmünden.

8. Partikelfilter nach einem der Ansprüche 1 bis 7, **dadurch gekennzeichnet , dass** die ausströmseitigen Strömungskanäle für zu reinigendes Fluid von den Spülfluidströmungskanälen zumindest teilweise entkoppelt sind.

9. Partikelfilter nach Anspruch 8, **dadurch gekennzeichnet, dass** die Filterwände aus einem deformierbaren Material bestehen, dass Randbereiche des aus den Filterwänden aufgebauten Filterkörpers derart abgefaltet sind, dass diese Spülfluideinlässe in bezüglich des zu reinigenden Fluids einströmseitig offene Strömungskanäle ausbilden und bezüglich des gereinigten Fluids ausströmseitig offene Strömungskanäle zumindest teilweise für das Spülfluid zu verschließen.

10. Partikelfilter nach einem der Ansprüche 1 bis 9, **dadurch gekennzeichnet , dass** im Bereich von Spülfluideinlass und/oder Spülfluidauslass und/oder im Bereich der Spülfluidkanäle an dem Filterkörper Versteifungselemente angebracht sind.

11. Partikelfilter nach einem der Ansprüche 1 bis 10, **dadurch gekennzeichnet , dass** ein Partikelspeicher vorgesehen ist, sowie Zuleitungen, um den den Filterkörper verlassenden und mit Partikeln beladenen Spülfluidstrom dem Partikelspeicher zuzuführen, in welchem die im Spülfluidstrom von dem Filterkörper abgeführten Partikel angesammelt werden.

12. Partikelfilter nach einem der Ansprüche 1 bis 11, **dadurch gekennzeichnet , dass** eine Rückführungsleitung vorgesehen ist, die von dem Filterkörper abgeführtes und von Partikeln zumindest teilweise abgereichertes Fluid dem Spülfluideinlass wieder zuführt.

13. Partikelfilter nach einem der Ansprüche 1 bis 12, **dadurch gekennzeichnet , dass** eine Heizeinrichtung zur Erwärmung des der Spülfluideintrittsöffnung zugeführten Spülfluids vorgesehen ist.

14. Partikelfilter nach einem der Ansprüche 1 bis 13, **dadurch gekennzeichnet , dass** eine Regenerationssteuereinrichtung zur Steuerung der Regeneration des Filters durch Spülen der einströmseitigen Filterkammern mit Spülfluid vorgesehen ist, und dass an dem Filter Sensoren zur Erfassung von für den Regenerationsbedarf oder die Durchführung der Regeneration oder für beide relevante Parameter erfassen.

15. Partikelfilter nach einem der Ansprüche 1 bis 14, **dadurch gekennzeichnet , dass** ein Temperatursensor zur Messung der Temperatur des Filterkörpers oder zur Messung von den Filterkörper passierenden Fluids vorgesehen ist und dass eine Spülfluidzuführeinrichtung vorgesehen ist, die die Spülfluidzufuhr in Abhängigkeit von der durch den Temperatursensor gemessenen Temperatur steuert.

16. Partikelfilter nach einem der Ansprüche 1 bis 15, **dadurch gekennzeichnet , dass** die Regenerationssteuereinrichtung konfiguriert ist, um bei Bedarf die Regeneration, welche den Schritt des Spülens der Filterkammern mit Spülfluid umfasst, bei währendem Betrieb einer den partikelbeladenen Fluidstrom erzeugenden Einrichtung oder Anlage durchzuführen.

17. Mit Partikeln beladenes Fluid erzeugende Einrichtung oder Anlage mit einem Partikelfilter nach einem der Ansprüche 1 bis 16, wobei zumindest eines oder mehrere der folgenden Bestandteile einer Regenerationseinrichtung ausgewählt aus Partikelspeicher, Heizeinrichtung zur Erwärmung von Spülfluid, Regenerationssteuereinrichtung und Temperatursensor dauerhaft an der Einrichtung oder Anlage vorgesehen sind.

18. Verfahren zur Regeneration von Partikelfiltern, wobei ein partikelbeladener Fluidstrom in einer Durchströmungsrichtung durch einen Partikelfilter mit Filterwänden geleitet wird, um die Partikel aus dem Fluidstrom zu entfernen, **dadurch gekennzeichnet , dass** zur Regeneration des Partikelfilters die mit dem zu reinigenden Fluidstrom beaufschlagten Bereiche der Filterwände in einer Richtung quer zu der Durchströmungsrichtung mit einem Spülfluidstrom beaufschlagt werden, welcher abgelagerte Partikel aus den Filtertaschen entfernt.

19. Verfahren nach Anspruch 18, **dadurch gekennzeichnet, dass** die Regeneration des Filters mittels des Spülfluidstroms bei währendem Betrieb einer dem Filter zugeordneten Maschine oder Einrichtung und bei währender Reinigung des mit Partikeln beladenen Fluidstroms durch den Filter erfolgt.
